Europäisches Patentamt

European Patent Office

Office européen des brevets

(19)

(11) Veröffentlichungsnummer: **0 019 017**
**B1**

(12) # EUROPÄISCHE PATENTSCHRIFT

(45) Veröffentlichungstag der Patentschrift:
**16.03.83**

(51) Int. Cl.³: **H 01 C 17/24,** G 01 K 15/00

(21) Anmeldenummer: **79200250.3**

(22) Anmeldetag: **21.05.79**

(54) Verfahren und Vorrichtung zum Trimmen mindestens eines temperaturabhängigen Widerstands.

(43) Veröffentlichungstag der Anmeldung:
**26.11.80 Patentblatt 80/24**

(45) Bekanntmachung des Hinweises auf die Patenterteilung:
**16.03.83 Patentblatt 83/11**

(84) Benannte Vertragsstaaten:
**CH DE FR NL SE**

(56) Entgegenhaltungen:
**DE-A-2 426 540**
**FR-A-2 115 796**
**GB-A-1 470 630**
**GB-A-1 474 731**
**US-A-3 425 166**

(73) Patentinhaber: **BBC Aktiengesellschaft Brown, Boveri & Cie., Haselstrasse, CH-5401 Baden (CH)**

(72) Erfinder: **Berner, Gianni, Dr., Ländliweg 10, CH-5400 Baden (CH)**
Erfinder: **Burkard, Hans, Dr., Mitteldorfweg 209, CH-5243 Mülligen (CH)**
Erfinder: **Schweri, Leo, Dipl.-Phys., Buchbühl, CH-8957 Spreitenbach (CH)**

Verfahren und Vorrichtung zum Trimmen mindestens eines temperaturabhängigen Widerstands

Die vorliegende Erfindung betrifft ein Verfahren zum Trimmen mindestens eines temperaturabhängigen Widerstands, insbesondere für ein Widerstandsthermometer, wobei eine auf einem Träger aufgebrachte Widerstandsbahn auf einen Widerstandswert getrimmt wird, der einem auf einer Eichkurve vorgegebenen Sollwert des Widerstands bei der Trimmtemperatur entspricht.

Bei der Herstellung von Widerstandselementen und insbesondere solchen, die für Widerstandsthermometer vorgesehen sind, wird gewöhnlich eine elektrisch leitende Schicht mit definiertem Temperaturkoeffizienten des Widerstands auf einen nichtleitenden Träger, das sogenannte Substrat, aufgebracht. Geeignete Schichten bestehen aus Metall und beispielsweise aus Platin oder Nickel, gebräuchliche Träger aus Oxidkeramik und vorzugsweise aus Aluminiumoxid. Die Schichten können als aushärtbare Paste aufgetragen oder im Vakuum aufgedampft oder durch Kathodenzerstäubung aufgebracht werden. Bei einer ersten Gruppe von Widerstandsthermometern ist die leitende Schicht als schraubenlinienförmige Bahn auf einem stab- oder rohrförmigen Träger, bei einer zweiten Gruppe als mäanderförmige Bahn auf eine ebene Platte aufgebracht.

Die mit einem Widerstandsthermometer messbare Temperatur ist eine vom Widerstandswert der Bahn abgeleitete Grösse, weshalb die Genauigkeit der Temperaturmessung von der Genauigkeit des Widerstandswerts abhängig ist. Zum Einstellen oder Trimmen des Widerstandswerts der Bahn ist bei den meisten Ausführungsformen der Widerstand der ursprünglich aufgetragenen, elektrisch leitenden Schicht kleiner als der Sollwert, und die Bahn dieser Schicht weist ein verbreitertes Teilstück auf. Durch Abtragen der Randpartie dieses Teilstücks kann dessen Breite verringert oder durch Abtragen eines parallel zur Längsrichtung der Bahn verlaufenden Mittelstreifens die Länge der Widerstandsbahn vergrössert werden, was beides eine Erhöhung des Leitungswiderstands bewirkt. Die leitende Schicht kann dabei einfacherweise mechanisch abgetragen werden, beispielsweise mit einem feinen Sandstrahl, aber auch mit einem gesteuerten Laserstrahl, der das Metall der Schicht verdampft.

Um die beim Trimmen angestrebte Genauigkeit zu erreichen, wird bei einem bekannten Verfahren der Träger auf einen Arbeitstisch gelegt und die Temperatur des Arbeitstisches mit einem eingebauten Thermoelement gemessen. Dann wird der Widerstandswert der leitenden Bahn gemessen und mit Hilfe einer Eichkurve festgestellt, um wieviel der gemessene Istwert der Widerstandsbahn vom Sollwert abweicht. Die Eichkurve gibt den Verlauf des Widerstands in Abhängigkeit von der Temperatur an, wobei der Widerstand bei 0 °C dem Nennwiderstand des zu trimmenden Widerstandsthermometers entspricht. Das Trimmen kann dann kontinuierlich mit gleichzeitiger ununterbrochener Messung des Widerstandswerts durchgeführt werden oder schrittweise nach einem Iterationsverfahren, bis die Differenz zwischen dem gemessenen Istwert der Widerstandsbahn und dem vorgegebenen Sollwert kleiner als die zulässige Toleranz ist.

Bei modernen Fabrikationsmethoden werden eine Vielzahl und beispielsweise mehr als 200 Widerstandsbahnen auf einer gemeinsamen Trägerplatte hergestellt und dann auf dieser Trägerplatte getrimmt. Danach wird die Platte in Plättchen gebrochen, von denen jedes nur eine Widerstandsbahn aufweist. Zum Trimmen wird eine automatisch arbeitende Vorrichtung verwendet, mit einem Computer, in dem die Werte der Eichkurve gespeichert sind, dem die gemessene Temperatur des Arbeitstisches und der gemessene Istwert der zu trimmenden Widerstandsbahn als Eingangsgrössen zugeführt werden und der die Steuersignale für die Verschiebung des Arbeitstisches relativ zu einer ortsfesten Trimmeinrichtung sowie für die Erregung dieser Trimmeinrichtung erzeugt.

Nachteilig bei dem beschriebenen Trimmverfahren ist die relativ ungenaue Temperaturmessung. Wegen der nur mit grossem Aufwand vermeidbaren tages- und jahreszeitlich bedingten Änderungen der Umgebungstemperatur im Arbeitsraum und wegen der relativ langen Zeitspanne für den Temperaturausgleich zwischen einem Werkstück und im vorliegenden Falle des Substrats und dem Arbeitstisch können zwischen dem Messpunkt im Arbeitstisch, wo das Thermoelement angeordnet ist, und der Oberfläche des Substrats mit den Widerstandsbahnen Temperaturdifferenzen von bis zu 1 °C auftreten. Jede ungenaue Temperaturbestimmung der Widerstandsbahn beim Trimmen hat aber zur Folge, dass die vom fertigen Widerstandsthermometer angezeigte Temperatur mit dem gleichen Fehler behaftet ist.

Der vorliegenden Erfindung liegt darum die Aufgabe zugrunde, ein Trimmverfahren mit einer verbesserten Messung der Trimmtemperatur zu schaffen. Diese Aufgabe wird erfindungsgemäss mit einem Trimmverfahren gelöst, bei dem zum Bestimmen der Trimmtemperatur mittels der ungetrimmten Widerstandsbahn zu einem beliebigen Zeitpunkt vor dem Trimmen ein erster Istwert dieser Widerstandsbahn bei einer Eichtemperatur gemessen und der Proportionalitätsfaktor zwischen diesem ersten Istwert und dem von der Eichkurve für die Eichtemperatur vorgegebenen Sollwert bestimmt wird und unmittelbar vor Beginn des Trimmens bei einer zweiten Temperatur ein zweiter Istwert der Widerstandsbahn gemessen und aus dem mit dem Proportionalitätsfaktor multiplizierten zweiten Istwert ein Widerstandssollwert aus der Eichkurve definiert wird, dessen zugeordnete Temperatur der Trimmtemperatur entspricht.

Nach bisherigen Erfahrungen ist es mit dem neuen Verfahren möglich, die massgebliche Temperatur beim Trimmen einer Widerstandsbahn ohne wesentlichen Mehraufwand mit einer Toleranz von besser als $\pm 0,2\,°C$ zu bestimmen und damit Widerstandsthermometer mit der gleichen Anzeigegenauigkeit herzustellen.

Eine bevorzugte Ausführungsform einer Vorrichtung zur Ausführung dieses Verfahrens ist gekennzeichnet durch ein elektronisches Leitwerk, dem ein Dateneingabegerät zum Eingeben der Sollwerte der Eichkurve, des ersten Istwerts des Widerstands der einen Widerstandsbahn sowie der Eichtemperatur, einen Speicher zum Speichern der vorgenannten Daten und ein Rechenwerk zum Errechnen des Proportionalitätsfaktors aus diesen Daten zugeordnet sind sowie eine Einrichtung zur numerischen Steuerung der Verschiebung eines Arbeitstisches und eine Einrichtung zum Trimmen von mindestens einer auf dem Arbeitstisch angeordneten Widerstandsbahn gemäss den Ausgangssignalen des Leitwerks, und durch einen Elektrodenrechen zum Anlegen an die Anschlussflächen mindestens einer Widerstandsbahn, welcher Elektrodenrechen zum Eingeben des Istwerts des Widerstands der mindestens einen Widerstandsbahn und Errechnen des Momentanwerts der Temperatur sowie zum Steuern des Trimmens mit dem Dateneingabegerät verbunden ist.

Im folgenden werden Ausführungsbeispiele des erfindungsgemässen Verfahrens und einer zu dessen Ausführung geeigneten Vorrichtung mit Hilfe der Figuren beschrieben. Es zeigen:

Fig. 1 die schematische Draufsicht auf ein Widerstandselement,

Fig. 2 eine Eichkurve $R^E$–$f(T)$ und die durch einen Messpunkt bestimmte Kurve $R^W$–$f(T)$ einer ungetrimmten Widerstandsbahn,

Fig. 3 die schematisch gezeichnete Draufsicht auf eine Substratplatte mit einer Vielzahl in Zeilen und Spalten angeordneten Widerstandsbahnen und

Fig. 4 das Blockschema einer Vorrichtung zur Ausführung des neuen Verfahrens.

Das neue Verfahren geht von mehreren Voraussetzungen aus. Zuerst muss das Material der Trägerplatte für die Widerstandsbahnen gut wärmeleitend sein, damit es auf der gesamten Oberfläche praktisch die gleiche Temperatur aufweist. Diese Voraussetzung ist für die gebräuchlichen $Al_2O_3$-Substrate ausreichend erfüllt. Weiter muss das Herstellverfahren gewährleisten, dass die Widerstandsbahnen übereinstimmende und reproduzierbare Temperaturkoeffizienten und allfällige Therme höherer Ordnung aufweisen. Auch diese Voraussetzung ist bei den heute gebräuchlichen Herstellverfahren erfüllt. Schliesslich darf beim Trimmen weder die Widerstandsbahn noch die Trägerplatte merklich erwärmt werden, welche Voraussetzung bei den gebräuchlichen Trimmverfahren ebenfalls erfüllt ist.

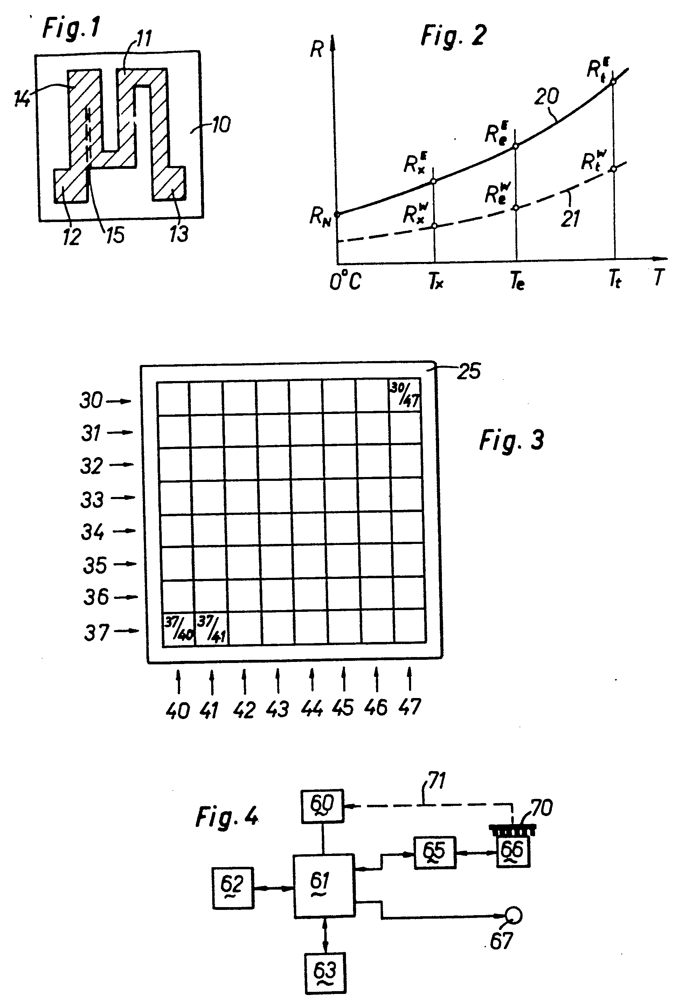

In Fig. 1 ist schematisch ein Widerstandselement gezeigt mit einem Substrat 10, einer Widerstandsbahn 11 und Anschlussflächen 12, 13.

Die Widerstandsbahn weist einen verbreiterten Teil 14 auf, der zum Anbringen einer Trimmspur 15 vorgesehen ist, die die Länge der Widerstandsbahn zwischen den Anschlussflächen und damit den Leitungswiderstand vergrössert.

Zum Trimmen nach dem neuen Verfahren wird das Widerstandselement zuerst in einen Klimaraum oder eine Klimakammer eingebracht und auf eine massive Metallplatte gelegt, die eine genau bekannte und konstante Temperatur aufweist, die im folgenden als Eichtemperatur bezeichnet wird. Nach etwa 30 bis 60 min, wenn die Temperatur des Widerstandselements stabilisiert und gleich der der Metallplatte ist, wird der Widerstandswert der Widerstandsbahn gemessen. Wie bereits einleitend erwähnt wurde, sollte dieser Wert kleiner als der angestrebte Sollwert sein, weil der Widerstandswert beim Trimmen nur vergrössert, aber nicht verkleinert werden kann.

In Fig. 2 ist eine Eichkurve 20 gezeigt, die den vorgegebenen Verlauf des Widerstandswertes $R^E$ in Abhängigkeit von der Temperatur T angibt und deren Widerstandswert bei der Temperatur von $0\,°C$ dem Nennwert $R_N$ der zu trimmenden Widerstandsbahn entspricht. Weiter ist in Fig. 2 die Kurve 21 für den Widerstand einer beliebigen Widerstandsbahn, die die oben genannten Voraussetzungen erfüllt, aufgezeichnet. Diese Kurve verläuft im gesamten interessierenden Temperaturbereich proportional zur Eichkurve 20, d.h. die Quotienten aus jedem Punkt auf der Kurve 21 mit dem der gleichen Temperatur zugeordnete Punkt auf der Eichkurve 20, sind gleich.

Zum Trimmen einer einzelnen Widerstandsbahn genügt es darum, wenn der Istwert des Widerstands $R_e^W$ dieser Widerstandsbahn bei der Eichtemperatur $T_e$ gemessen und mit Hilfe des aus der Eichkurve 20 ablesbaren zugeordneten Eichwiderstands $R_e^E$ der Proportionalitätsfaktor $F = R_e^W/R_e^E$ bestimmt wird. Beim Trimmen der Widerstandsbahn muss dann nur noch der Momentanwert des Widerstands $R_r^W$ gemessen und mit dem Faktor F multipiziert werden, um den Sollwert $R_t^E = F \cdot R_r^W$ des Widerstands bei der Trimmtemperatur $T_t$ zu errechnen. Sobald dann beim Trimmen der Widerstandsbahn deren Widerstandswert $R_t^W$ gleich dem zugeordneten Widerstandswert $R_t^E$ auf der Eichkurve ist, stimmt die gesamte Widerstandskurve 21 mit der Eichkurve 20 überein, d.h. die Widerstandsbahn ist auf den vorgegebenen Sollwert getrimmt.

Die Proportionalität der Eichkurve 20 und der Widerstandskurve 21 einer ungetrimmten Widerstandsbahn ermöglicht auch, eine ungetrimmte Widerstandsbahn als Widerstandsthermometer zu verwenden. Dazu wird zuerst wieder unter Eichbedingungen aus dem gemessenen Istwert $R_e^W$ der Widerstandsbahn und dem vorgegebenen Sollwert $R_e^E$ auf der Eichkurve der Proportionalitätsfaktor F bestimmt. Zum weiteren Bestimmen der Temperatur mit der ungetrimmten Widerstandsbahn genügt es dann, den Istwiderstand $R_x^W$ der Bahn zu messen, dann mit Hilfe des Proportionalitätsfaktors den entsprechenden Sollwiderstand $R_x^E$ auf der Eichkurve zu errechnen und danach auf der Abszisse des Diagramms den Wert der Temperatur $T_x$ abzulesen, der dem errechneten Sollwert $R_x^E$ entspricht.

Bei dem neuen Verfahren wird diese Temperaturmessung mit Hilfe einer nichtgetrimmten Widerstandsbahn genutzt, um die Temperatur dieser und anderer auf der gleichen Trägerplatte angeordneter Widerstandsbahnen bei bzw. vor dem Trimmen zu messen.

Fig. 3 zeigt schematisch die Draufsicht auf eine Trägerplatte 25 mit insgesamt 64 Widerstandsbahnen. Die Widerstandsbahnen sind in acht Zeilen 30 bis 37 und acht Spalten 40 bis 47 angeordnet. Zum Trimmen der Widerstandsbahnen wird zuerst der Istwert des Widerstands irgendeiner Widerstandsbahn, z.B. der Bahn 30/47, bei einer Eichtemperatur gemessen. Danach wird mit Hilfe einer Kurve gemäss der Fig. 2 oder einer entsprechenden Tabelle der Sollwert des Widerstands bei dieser Eichtemperatur festgestellt und aus dem Quotienten von Istwert zu Sollwert der Proportionalitätsfaktor bestimmt. Die Trägerplatte kann nach der Bestimmung des Proportionalitätsfaktors gelagert werden.

Zum Trimmen wird die Trägerplatte auf einem Trimmtisch befestigt, der mit Hilfe einer numerischen Steuereinrichtung in der Richtung der Zeilen und der Spalten schrittweise verschoben werden kann. Solche Einrichtungen sind jedem Fachmann bekannt, weshalb auf deren Beschreibung hier ausdrücklich verzichtet wird. Die Trägerplatte wird vorzugsweise vorgängig in der Nähe des Trimmtisches gelagert, damit der Temperaturausgleich zwischen Trimmtisch bzw. Trimmraum und Trägerplatte möglichst wenig Zeit beansprucht. Sobald die Temperatur der Trägerplatte stabilisiert ist, wird der Istwert des Widerstands der Widerstandsbahn 30/47 erneut gemessen. Der gemessene Istwert wird dann mit dem vorgängig bestimmten Proportionalitätsfaktor multipliziert. Das Produkt ergibt einen Punkt auf der Eichkurve (Fig. 2), der über der wahren Temperatur des Widerstandsbahn bzw. der Trägerplatte zum Zeitpunkt der zweiten Istwertmessung steht, welche Temperatur im folgenden auch als Trimmtemperatur bezeichnet wird.

Anschliessend daran wird der Istwert der ersten zu trimmenden Widerstandsbahn, beispielsweise der Bahn 37/40, gemessen und mit dem Sollwert auf der Eichkurve verglichen, der der vorgängig bestimmten Trimmtemperatur entspricht. Beim anschliessenden Trimmen wird durch das Erstellen einer Trimmbahn 15 (Fig. 1) der Istwert des Widerstands der Widerstandsbahn so lange erhöht, bis dieser innerhalb der zulässigen Toleranz im Bereich des Sollwerts liegt.

Danach wird erneut die Trimmtemperatur bestimmt und anschliessend der Istwert einer zweiten zu trimmenden Widerstandsbahn, beispielsweise der Bahn auf dem Element 37/41, gemessen und wie die erste Widerstandsbahn getrimmt.

Bei der praktischen Ausführung des neuen Verfahrens wird vorteilhafterweise eine elektronische Mess-/Auswerte- und Steuereinrichtung verwendet, die die Istwerte der Widerstände der auf einer Trägerplatte aufgebrachten Widerstandsbahnen in rascher Folge messen und auswerten kann und die Eingangssignale für die numerische Steuerung der Verschiebung des Arbeitstisches und für die Trimmeinrichtung liefert. Weiter wird ein Kontaktrechen verwendet, der eine Mehrzahl Kontaktfedern aufweist, die gleichzeitig auf die Anschlussflächen mehrerer und vorzugsweise aller in der gleichen Zeile angeordneten Widerstandsbahnen gedrückt werden.

Wie die praktische Erfahrung gezeigt hat, können die Genauigkeit der Temperaturbestimmung und der technische Aufwand verringert werden, wenn die gemäss Fig. 3 auf einer Trägerplatte angeordneten Widerstandsbahnen nicht mit Hilfe nur einer gemessenen und als Widerstandsthermometer verwendeten Widerstandsbahn getrimmt werden, sondern wenn in jeder Zeile eine Widerstandsbahn gemessen und als Widerstandsthermometer verwendet wird. Dazu wird, wie schon weiter oben beschrieben wurde, beispielsweise der Istwert des Widerstands der Widerstandsbahn auf dem Element 30/47 im Klimaraum gemessen und dessen Proportionalitätsfaktor $F_{30/47}$ bestimmt. Vor Beginn des Trimmens werden dann die Istwerte aller Widerstände in der Spalte 47 gemessen und mit Hilfe des Proportionalitätsfaktor $F_{30/47}$ die Proportionalitätsfaktoren $F_{31/47}$ bis $F_{37/47}$ dieser Widerstandsbahnen bestimmt. Auf diese Weise können mit dem «primären» Widerstandsthermometer auf dem Element 30/47 weitere «sekundäre» Widerstandsthermometer auf den Elementen 31/47 bis 37/47 erzeugt werden. Es versteht sich, dass irgendeine Widerstandsbahn jeder Zeile als «sekundäres» Widerstandsthermometer verwendet werden kann und die beschriebene Anordnung aller «sekundären» Widerstandsthermometer in der gleichen Spalte nur eine besonders einfache Anwendung ist. Nachmessungen haben gezeigt, dass der Messfehler der «sekundären» Widerstandsthermometer gegenüber dem «primären» Widerstandsthermometer maximal einige tausendstel Grad beträgt. Es versteht sich auch, dass beim anschliessenden Trimmen der Widerstandsbahnen in den einzelnen Zeilen die als «sekundäres» Widerstandsthermometer verwendete Widerstandsbahn vorteilhafterweise zuletzt getrimmt wird.

Bei einer bevorzugten Ausführungsform des neuen Verfahrens werden im Eichraum der Istwert des Widerstands für zwei in der gleichen Zeile angeordnete Widerstandsbahnen gemessen, und es werden die entsprechenden zwei Proportionalitätsfaktoren bestimmt. Diese Doppelbestimmung ermöglicht die Kontrolle der vorgängig im Klimaraum gemessenen Widerstands- und Temperaturwerte auf allfällige Messfehler.

Fig. 4 zeigt das stark vereinfachte Blockschaltbild einer zur Ausführung des neuen Verfahrens geeigneten Mess-/Auswerte- und Steuervorrichtung. Die Vorrichtung enthält ein Eingabeterminal 60, das mit einem Leitwerk 61 verbunden ist. Dem Leitwerk sind ein Speicher 62 und ein Rechenwerk 63 zugeordnet. Das Leitwerk ist weiter mit einer Einrichtung 65 zur Verschiebung des Arbeitstisches 66 sowie mit einer Laserlichtquelle 67 verbunden Zur Vorrichtung gehört auch ein Kontaktrechen 70, der zum on-line-Betrieb über eine Leitung 71 mit dem Eingabeterminal 60 verbunden ist.

Beim Betrib dieser Vorrichtung werden vor dem Beginn des Trimmens die Sollwerte der Kurve $R^E = f(T)$ für den Nennwiderstand $R_N$ der zu trimmenden Widerstandsthermometer in das Eingabeterminal 60 eingegeben und über das Leitwerk 61 in den Speicher 62 eingespeichert. Nach dem Auflegen einer Trägerplatte mit Widerstandselementen werden die Ortsdaten (z. B. 30/47) der vorgängig ausgemessenen Widerstandsbahn, des gemessenen Widerstandswerts $R_o^W$ und die Eichtemperatur $T_o$ ebenfalls in das Eingangsterminal eingegeben und über das Leitwerk im Speicher gespeichert. Das Leitwerk ruft dann die letzteren Daten wieder ab und gibt sie in das Rechenwerk 63, das den Proportionalitätsfaktor F errechnet, der dann über das Leitwerk ebenfalls in den Speicher eingespeichert wird.

Das Leitwerk gibt dann Steuersignale an die Einrichtung 65, die den Arbeitstisch 66 verschiebt, bis die Anschlussflächen der Widerstandsbahn mit den vorgegebenen Ortsdaten von einem definierten Kontaktpaar des Kontaktrechens 70 berührt werden. Das Leitwerk lässt dann den Widerstand dieser Widerstandsbahn messen, gibt diesen Istwert $R_t^W$ und den im Speicher gespeicherten Proportionalitätsfaktor F in das Rechenwerk, das über den entsprechenden Widerstandswert $R_t^E$ den Momentanwert der Temperatur $T_t$ der Widerstandsbahn bzw. des Substrats errechnet. Das Leitwerk bewirkt dann über die numerische Steuereinrichtung eine Verschiebung des Arbeitstisches in der Richtung der Spalten im Muster der Widerstandselemente gemäss Fig. 3 und das Messen des Istwerts von mindestens einer Widerstandsbahn in jeder Zeile sowie das Berechnen des Proportionalitätsfaktors für jede gemessene Widerstandsbahn.

Zum Trimmen der Widerstandsbahnen wird zuerst durch erneutes Messen des Istwerts des Widerstands der Widerstandsbahn, deren Proportionalitätsfaktor vorgängig bestimmt und gespeichert wurde, die Arbeitstemperatur und daraus der Sollwert des zu trimmenden Widerstands bestimmt. Danach wird der Istwert der gleichen Widerstandsbahn gemessen und, wenn dieser kleiner ist als der Sollwert, die Laserlichtquelle eingeschaltet und der Arbeitstisch zur Ausbildung einer Trimmspur schrittweise verschoben. Wie bereits oben erwähnt wurde, wird nach jedem Schritt, d.h. nach jeder Verlängerung der Trimmspur, der Istwert des Widerstands erneut gemessen und mit dem Sollwert verglichen. Wie bei jedem Iterationsverfahren werden die Verschiebeschritte um so kleiner, je kleiner die Differenz zwischen dem vorgegebenen Sollwert und dem gemessenen Istwert des Widerstands ist. Sobald der Istwert im Bereich der zulässigen Toleranz an den Sollwert angenähert ist, ist der Trimmvorgang beendet.

Nach bisherigen Erfahrungen ermöglicht die neue Vorrichtung das Trimmen von Widerständen mit einer Geschwindigkeit im Bereich von etwa 1 sec pro Widerstand, wobei die erreichbare Genauigkeit, beispielsweise für 1,5 kΩ-Widerstandsthermometer, der DIN-Genauigkeit von ±0,1 bis 0,3 °C entspricht.

**Patentansprüche**

1. Verfahren zum Trimmen mindestens eines temperaturabhängigen Widerstands, insbesondere für ein Widerstandsthermometer, wobei eine auf einem Träger aufgebrachte Widerstandsbahn auf einen Widerstandswert getrimmt wird, der einem auf einer Eichkurve vorgegebenen Sollwert des Widerstands bei der Trimmtemperatur entspricht, dadurch gekennzeichnet, dass zum Bestimmen der Trimmtemperatur mittels der ungetrimmten Widerstandsbahn zu einem beliebigen Zeitpunkt vor dem Trimmen ein erster Istwert dieser Widerstandsbahn bei einer Eichtemperatur gemessen und der Proportionalitätsfaktor zwischen diesem ersten Istwert und dem von der Eichkurve für die Eichtemperatur vorgegebenen Sollwert bestimmt wird, und unmittelbar vor Beginn des Trimmens bei einer zweiten Temperatur ein zweiter Istwert der Widerstandsbahn gemessen und aus dem mit dem Proportionalitätsfaktor multiplizierten zweiten Istwert ein Widerstandssollwert auf der Eichkurve definiert wird, dessen zugeordnete Temperatur der Trimmtemperatur entspricht.

2. Verfahren nach Anspruch 1 zum Trimmen mehrerer auf dem gleichen Träger angeordneter Widerstandsbahnen, dadurch gekennzeichnet, dass für mindestens eine ausgewählte ungetrimmte Widerstandsbahn der Proportionalitätsfaktor bei der Eichtemperatur bestimmt wird und unmittelbar vor dem Trimmen jeder Widerstandsbahn der zweite Istwert der mindestens einen ausgewählten Widerstandsbahn gemessen und daraus die Temperatur bei der zweiten Istwertmessung bestimmt wird und die mindestens eine ausgewählte Widerstandsbahn als letzte der mehreren Widerstandsbahnen getrimmt wird.

3. Verfahren nach Anspruch 2, wobei die Widerstandsbahnen in Zeilen und Spalten auf einer Trägerplatte aufgebracht sind und in einer den Zeilen entsprechenden Aufeinanderfolge getrimmt werden, dadurch gekennzeichnet, dass für mindestens eine ausgewählte ungetrimmte Widerstandsbahn in einer der Zeilen der Proportionalitätsfaktor bei der Eichtemperatur bestimmt wird und danach für mindestens eine ausgewählte ungetrimmte Widerstandsbahn in jeder der anderen Zeilen ein erster Istwert gemessen und mittels der von der mindestens einen Widerstandsbahn in der einen Zeile bestimmten Messtemperatur für jeden dieser mindestens einen ausgewählten Widerstandsbahnen in jeder der anderen Zeilen ein zugeordneter Proportionalitätsfaktor bestimmt wird und unmittelbar vor dem Trimmen jeder Widerstandsbahn einer Zeile der zweite Istwert der in der gleichen Zeile angeordneten ausgewählten Widerstandsbahn gemessen und mittels dem zugeordneten Proportionalitätsfaktor die Temperatur bei der zweiten Istwertmessung bestimmt wird und die Widerstandsbahnen nacheinander getrimmt werden und die ausgewählte Widerstandsbahn als letzte der Widerstandsbahnen der Zeile getrimmt wird.

4. Vorrichtung zur Ausführung des Verfahrens nach Anspruch 1, gekennzeichnet durch ein elektronisches Leitwerk (61), dem ein Dateneingabegerät (60) zum Eingeben der Sollwerte der Eichkurve (Fig. 2), des ersten Istwerts des Widerstands der einen Widerstandsbahn sowie der Eichtemperatur, einen Speicher (62) zum Speichern der vorgenannten Daten und ein Rechenwerk (63) zum Errechnen des Proportionalitätsfaktors aus diesen Daten zugeordnet sind, sowie eine Einrichtung (65) zur numerischen Steuerung der Verschiebung eines Arbeitstisches (66) und eine Einrichtung (67) zum Trimmen von mindestens einer auf dem Arbeitstisch angeordneten Widerstandsbahn gemäss den Ausgangssignalen des Leitwerks, und durch einen Elektrodenrechen (70) zum Anlegen an die Anschlussflächen (12, 13) mindestens einer Widerstandsbahn (11), welcher Elektrodenrechen zum Eingeben des Istwerts des Widerstands der mindestens einen Widerstandsbahn und Errechnen des Momentanwerts der Temperatur sowie zum Steuern des Trimmens mit dem Dateneingabegerät verbunden ist.

## Claims

1. A method for trimming at least one temperature-dependent resistance, in particular for a resistance thermometer, in which a resistance track which is applied to a carrier is trimmed to a resistance value which corresponds to a nominal value, predetermined on a calibrating curve, of the resistance at the trimming temperatur, characterised in that for determining the trimming temperature by means of the untrimmed resistance track a first actual value of this resistance track is measured at any point in time before the trimming at a calibrating temperature and the factor of proportionality between this first actual value and the nominal value predetermined by the calibrating curve for the calibrating temperature is determined and that immediately before the start of trimming a second actual value of the resistance track is measured at a second temperature and from the second actual value multiplied by the factor of proportionality a nominal resistance value is defined on the calibrating curve, the associated temperature of which nominal resistance value corresponds to the trimming temperature.

2. A method according to Claim 1, for trimming several resistance tracks which are disposed on the same carrier, characterised in that the factor of proportionality is determined at the calibrating temperature for at least one selected untrimmed resistance track and that immediately before the trimming of each resistance track the second actual value of at least one selected resistance track is measured and from this the temperature at the second actual value measurement is determined and the selected resistance track, of which there is at least one, is trimmed as the last of several resistance tracks.

3. A method according to Claim 2, wherein the resistance tracks are applied in rows and columns on a support plate and are trimmed in a sequence corresponding to the rows, characterised in that for at least one selected untrimmed resistance track in one of the rows the factor of proportionality is determined at the calibrating temperature and thereafter for at least one selected untrimmed resistance track in each of the other rows a first actual value is measured and by means of the measuring temperature, determined by the resistance track, of which there is at least one, in the one row, for each of these selected resistance tracks, of which there is at least one, in each of the other rows an associated factor of proportionality is determined and immediately before the trimming of each resistance track of a row the second actual value of the selected resistance track disposed in the same row is measured and by means of the associated factor of proportionality the temperature at the second actual value measurement is determined and the resistance tracks are successively trimmed and the selected resistance track is trimmed as the last of the resistance tracks of the row.

4. A device for carrying out the method according to Claim 1, characterised by an electronic control unit (61) which is associated with a data input device (60) for entering the nominal values of the calibrating curve (Fig. 2) of the first actual value of the resistance of the one resistance track and of the calibrating temperature, a store (62) for storing the aforementioned data and an arithmetic and logic unit (63) for calculating the factor of proportionality from these data, and a facility (65) for numerically controlling the displacement of a work table (66) and a facility (67) for trimming at least one resistance track, arranged on the work table, in accordance with the output signals of the control unit, and by an electrode comb (70) to be applied to the terminal areas (12, 13) of at least one resistance track (11), which electrode comb is connected to the data input device for entering the actual value of the resistance of the resistance track, of which there is at least one, and calculating the instantaneous value of the temperature and for controlling the trimming process.

## Revendications

1. Procédé pour ajuster au moins une résistance dépendant de la température, en particulier un thermomètre à résistance, selon lequel une piste de résistance prévue sur un support est ajustée sur une valeur de résistance qui correspond à une valeur de consigne prédéterminée de la résistance sur une courbe d'étalonnage pour la température d'ajustement, caractérisé en ce que pour déterminer la température d'ajustement au moyen de la piste de résistance non ajustée, on mesure à un moment quelconque précédant l'ajustement, une première valeur réelle de cette piste de résistance pour une température d'étalonnage et on détermine le facteur de proportionnalité entre cette première valeur réelle et la valeur de consigne prescrite par la courbe d'étalonnage pour la température d'étalonnage et, immédiatement avant le début de l'ajustement, on mesure, à une deuxième température, une deuxième valeur réelle de la piste de résistance et on définit ensuite à partir de la deuxième valeur réelle multipliée par le facteur de proportionnalité à partir de la courbe d'étalonnage une valeur de consigne de résistance, dont la température associée correspond à la température d'ajustement.

2. Procédé suivant la revendication 1 pour ajuster plusieurs pistes de résistance disposées sur le même support, caractérisé en ce que pour au moins une piste de résistance non ajustée sélectionnée, on détermine le facteur de proportionnalité à la température d'étalonnage et, immédiatement avant l'ajustement de chaque piste de résistance, on mesure la deuxième valeur réelle de ladite au moins une piste de résistance sélectionnée et à partir de cette valeur, on détermine la température pour la mesure de la deuxième valeur réelle et on ajuste ladite au moins une piste de résistance sélectionnée comme la dernière des diverses pistes de résistance.

3. Procédé suivant la revendication 2 dans lequel les pistes de résistance sont disposées en rangées et en colonnes sur une plaque de support et sont ajustées en une succession correspondant aux rangées, caractérisé en ce que pour au moins une piste de résistance non ajustée sélectionnée, on détermine dans une des rangées le facteur de proportionnalité pour la température d'étalonnage puis, pour au moins une piste de résistance non ajustée sélectionnée de chacune des autres rangées, on mesure une première valeur réelle et, au moyen de la température de mesure déterminée pour ladite au moins une piste de résistance dans la première rangée, on détermine pour lesdites pistes de résistance sélectionnées dans chacune des autres rangées, un facteur de proportionnalité associé et, immédiatement avant l'ajustement de chaque piste de résistance d'une rangée, on mesure la deuxième valeur réelle de la piste de résistance sélectionnée disposée dans la même rangée et, au moyen du facteur de proportionnalité associé, on détermine la température pour la mesure de la deuxième valeur réelle et on ajuste les pistes de résistance les unes à la suite des autres, la piste de résistance sélectionnée étant ajustée en tant que dernière piste de résistance de la rangée.

4. Dispositif pour réaliser le procédé suivant la revendication 1, caractérisé par un dispositif de commande électronique (61) auquel sont associés un appareil d'introduction de données (60) servant à introduire les valeurs de consigne de la courbe d'étalonnage (Fig. 2), la première valeur réelle de la résistance de la piste de résistance ainsi que la température d'étalonnage, une mémoire (62) pour stocker les données précitées et une unité de calcul (63) pour calculer le facteur de proportionnalité à partir de ces données, ainsi qu'un dispositif (65) pour commander numériquement le déplacement d'une table de travail (66) et un dispositif (67) pour ajuster au moins une piste de résistance disposée sur la table de travail en fonction des signaux de sortie du dispositif de commande, et par une barre à électrodes (70) à appliquer sur les surfaces de connexion (12, 13) d'au moins une piste de résistance (11), cette barre à électrodes étant connectée à l'appareil d'introduction de données pour introduire la valeur réelle de la résistance de ladite au moins une piste de résistance et pour calculer la valeur du moment de la température ainsi que pour piloter l'ajustement.

Fig.1

Fig. 2

Fig. 3

Fig. 4